# EUROPEAN PATENT APPLICATION

(11) **EP 0 633 047 A1**
(43) Date of publication of application: **11.01.1995**
(21) Application number: 94201738.5
(22) Date of filing: 17.06.1994
(51) Int. Cl.: B01D 1/22, B01D 1/00, C02F 1/04, G03C 11/00

(54) **Evaporator apparatus**

(30) Priority: 08.07.1993 EP 93201998
(71) Applicant: AGFA-GEVAERT naamloze vennootschap, B-2640 Mortsel (BE)
(72) Inventor: de Niel, Marc, Agfa-Gevaert N.V., B-2640 Mortsel (BE); Verlinden, Bart, Agfa-Gevaert N.V., B-2640 Mortsel (BE); Claes, Jan, Agfa-Gevaert N.V., B-2640 Mortsel (BE); Visintin, Dionisio, Agfa-Gevaert N.V., B-2640 Mortsel (BE)

(57) **Abstract**

Evaporator apparatus for treating a waste solution, which comprises a closed chamber (24), a drum (25), means (45) for maintaining a reduced pressure in said chamber, applicator means (32) for maintaining a body of waste solution in contact with said drum, a tank (15) for waste solution and pump means (34) for feeding waste solution from said tank to said applicator means, heating means (31) for heating said drum to cause waste solution applied thereto to become concentrated by evaporation to a sludge and scraper means (37) for removing said sludge from said drum, said applicator means having outlet means (36) for carrying back an amount of waste solution from said body to said tank (15) which is at least equal to the amount of solution applied to said movable surface means per unit of time.

## Description

### 1. Field of the invention.

The present invention relates to an evaporator apparatus for treating waste photographic solutions, and more in particular to those suitable for treating waste solutions discharged as a result of the processing of a photographic light-sensitive material.

Normally, in a photographic treatment of a photographic light-sensitive silver halide material, a monochrome light-sensitive material (black-and-white photosensitive material) is developed, fixed, and water-washed, whereas a colour light-sensitive material (colour photosensitive material) is colour-developed, bleach-fixed (or bleached and fixed), water-washed, and stabilised.

In the photographic processing of a large quantity of light-sensitive materials, any component which has been consumed in a photographic processing is replenished. A component which has eluted as a result of the photographic processing or a component which has condensed as a result of evaporation (for example, bromide salts which exist in a developer and silver complex salts which exist in a fixing solution) is removed to keep the rate of each component of the processing solution to be constant, whereby the performance of the processing solution does not vary. In this photographic processing, a replenisher is supplied with the processing solution and part of the processing solution is wasted to remove the concentrated component.

In recent years, the amount of processing solution as well as of water is strongly reduced in carrying out photographic processing in order to avoid environmental pollution and to photographically develop at low cost.

According to ordinances recently put into force, it is permitted to waste water and coolants used for photographic processing to sewerages and rivers. However, it is not permitted to discharge photographic waste solutions such as a developer, fixing solution, colour developer, bleach-fix solution (or bleaching solution and fixing solution), and stabilising agent to sewerages and rivers.

An apparatus which facilitates the treatment of a photographic waste solution is proposed in JP-U-70841/1985. According to this disclosure, pressure is applied to a photographic waste solution so as to evaporate, and then, condense or solidify the photographic waste solution. When the photographic waste solution is evaporated, poisonous gases or gases having an offensive odour such as sulphur dioxide, hydrogen sulphide, and ammonia are generated. This is because ammonium thiosulphate and sulphites (ammonium salts, sodium salts and potassium salts) contained in a photographic solution such as a fixing solution and a bleach-fix solution decompose at high temperatures. In addition to the gas generation, the pressure in an evaporation oven increases owing to the cubical expansion caused by the aerification of water which is contained in photographic waste solution when an evaporation treatment is carried out. As a result, the above-described poisonous gases or evil-smelling gases leak from a waste solution treatment apparatus.

An improved apparatus is disclosed in US-A-4,940,134, and includes a waste solution reservoir, which is maintained at a constant level. A drum, partially immersed in the waste solution, is rotated to coat its surface. The drum is heated to produce waste vapour. The waste vapour is condensed by a condenser and filtered and solid wastes are scraped from the surface of the drum. The condenser has a drain tank for collecting condensate and a non-condensable gas component. The interior of the drain tank is sealed to form an airtight seal and has a vent for exhausting the non-condensable gas component from the interior portion to the outside. The air vent includes an absorption tower to treat the non-condensable gas component.

A disadvantage of this apparatus is that there is a serious risk for the formation of sludge in the waste solution reservoir as a consequence of heat transmitted to the reservoir by the heated drum which partially dips into it. This sludge risks to jeopardize the satisfactory operation of the apparatus in the long run. In addition, the temperatures at which the apparatus are operated, judging from the experiments described in the patent specification, are such that there exists a serious risk for a decomposition of ammonium thiosulphate and sulphites, as described above.

Still another apparatus is disclosed in US-A 2,281,811, and comprises a heated drum to which a liquid to be dried is applied by means of a trough having an overflow edge at the free end of a lip. The trough has an overflow pipe to maintain a continuous movement of liquid through the trough. Movement of liquid in the trough is maximum near said overflow pipe but very reduced at regions remote of said pipe so that there is a serious risk for sludge formation at such stagnant regions.

### SUMMARY OF THE INVENTION

### Objects of the invention.

It is an object of the present invention to provide an improved apparatus for treating a waste solution, which is not liable to the formation of sludge at undesired places, in particular in the means for applying waste liquid onto a rotating evaporation drum, maintained at raised temperature and reduced air pressure.

It is a further object of the invention to provide an improved apparatus which allows the temperature of waste solution fed to an evaporation drum to be lower than 50° C so that undesired decomposition of waste components (e.g. silver salts) is avoided.

### Statement of the invention.

In accordance with the present invention, an evaporator apparatus for treating a waste solution, which comprises a closed chamber, surface means in said chamber which is movable about a horizontal axis through an endless path, means for maintaining a reduced pressure in said chamber, applicator means for maintaining a body of waste solution in contact with said surface means, a tank for waste solution and pump means for feeding solution from said tank to said applicator means, heating means for heating said movable surface means to cause waste solution applied thereto to become concentrated by evaporation to a sludge, and scraper means for removing said sludge from said surface means, is characterised in that said applicator means has two parallel edges, a front edge for the application of waste solution to said surface means and a rear edge for carrying back an amount of waste solution from said body to said tank which is at least equal to the amount of solution applied to said movable surface means per unit of time.

The effect of the inventive feature is that a homogeneous movement is maintained in said body of waste solution, from the front towards the rear edge whereby there is a continuous replacement of solution at those critical areas where locally increased temperatures tend to cause premature evaporation of the solution whereby sludge formes adhering to the inside surfaces of said applicator means destroying in the long run the satisfactory operation of the apparatus.

We have found that it is suitable that the amount of waste solution being returned to the waste solution tank amounts to at least three times and even up to ten times or more the amount of solution applied to said movable surface per unit of time.

Other possible embodiments of the inventive apparatus are as follows.

The heating means for heating said surface means is constituted by any appropriate element or combination of elements for heating said surface by radiation or convection. Thus, said heating means may comprise radiant or resistive electrical heaters, elements heated by a hot liquid, etc. There may be provided shielding means between the heating means and said surface means, thereby to shield a zone of said movable surface means comprised between said scraper means and said applicator means. This has the advantage that the surface temperature of said movable surface means falls as the surface means travels through such zone, whereby it has its lowest temperature as it reaches the applicator means. This is very advantageous to avoid premature evaporation of waste solution in the applicator means.

The temperature of waste solution fed to the applicator means is lower than 50 °C.

Finally, the movable surface means is suitably formed by the cylindrical surface of a drum.

The invention will be described hereinafter by way of example with reference to its application in photography, but it will be understood that the apparatus according to the invention finds its application as well in the fields of galvanic plants, glazier plants, emulsifying oil treatments, solvent treatments, tanning activities, etc., in which waste solutions are highly polluting and allow the recovery of raw materials.

### BRIEF DESCRIPTION OF THE DRAWINGS

Fig. 1 is a diagrammatic view of one embodiment of an installation according to the invention for the recovery of raw material from a waste solution,
Fig. 2 is a view in detail of the heat evaporator of the installation of Fig. 1,
Fig. 3 is a front view according to arrow 3 of Fig. 4,
Fig. 4 is a plan view,
Fig. 5 is a section on line 5-5 of Fig. 4, and
Fig. 6 is a section on line 6-6 of Fig. 4 of one embodiment of a waste liquid applicator for the heat evaporator according to Fig. 2, and
Fig. 7 illustrates another embodiment of a suitable waste liquid applicator.

### Detailed description of the invention.

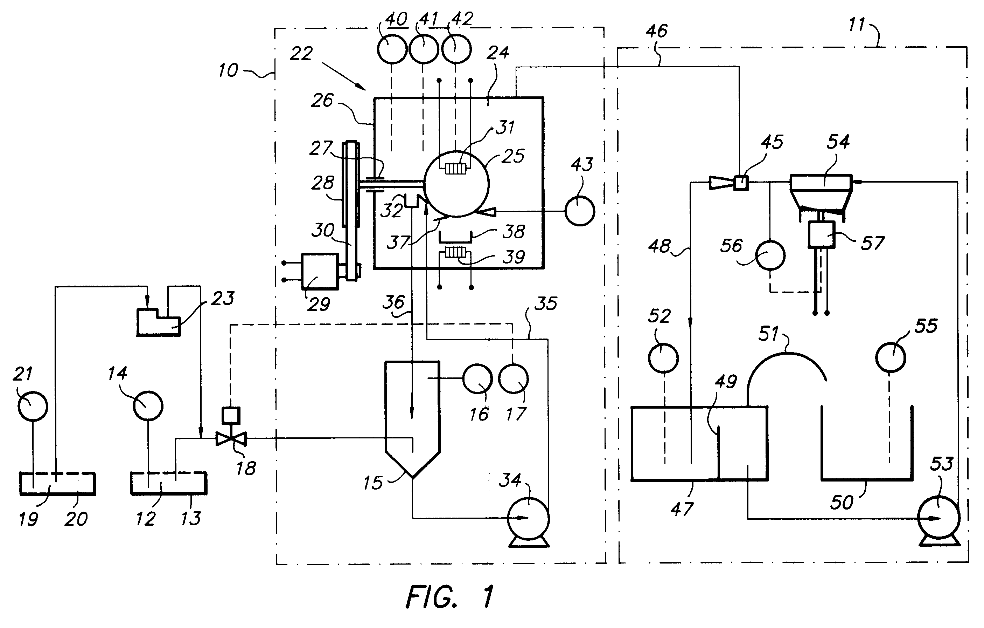

Fig. 1 shows a schematic drawing of one embodiment of the present invention, wherein rectangle 10 in dot-and-dash lines is the evaporation section and rectangle 11 is the condensing section.

Waste solution 12 in a waste solution tank 13 wherein the liquid level is controlled by a level sensor 14, flows to a buffer tank 15 because of the vacuum when valve 18 is open. Tank 15 may comprise a sensor 16 signalling the maximum level in the tank, and a sensor 17 controlling electromagnetic valve 18 to maintain a minimum level in the tank.

Antifoam solution 19 in tank 20 has its level controlled by sensor 21. A peristaltic pump 23 adds this solution to the waste solution before it flows into the buffer tank in order to keep foam formation under control.

Heat evaporator 22 consists of an airtight housing 24 wherein a drum 25 is mounted for rotation about a horizontal axis. The housing is suitably made from stainless steel provided with a protective coating at the innerside, or from a composite material.

Drum 25 has a cylindrical mantle, which in the present embodiment is made of glass. However, other suitable materials that resist corrosion such as stainless steel, ceramic compositions and the like, can be used as well.

One shaft end of drum 25 may extend via a vacuum-tight sealing 27 through a lateral wall 26 of housing 24, as shown diagrammatically, and have a pulley 28 drivingly engaged by a motor 29 with inbuilt reduction gear, via a timing belt 30. However, both end journals of the shaft of drum 25 can also be located inside housing 24, which facilitates the construction, as well as both pulleys and belt 30, so that only the output shaft of motor 29 must vacuum-tightly pass through wall 26.

Inside drum 25 an electrical IR heater 31 is provided.

Heat evaporator 22 comprises further a waste solution applicator 32 for coating a layer of waste solution on the surface of heated drum 25. Waste solution is fed by pump 34 and via inlet conduit 35 to applicator 32, whereas excess solution flows back via outlet conduit 36 to buffer tank 15 and so to pump 34.

A scraper 37 consisting of a metal or plastic blade is resiliently urged against the peripheral surface of drum 25 and preferably has means (not shown) for adjusting the pressure exerted on the cylinder surface. Removed sludge, i.e. residual solid components resulting from evaporation of liquid on the drum is collected in a receptacle 38. Heater 39 heats said receptacle in order to obtain a dry sludge.

The following sensors are mounted in housing 24.

Sensor 40 for measuring the air pressure, sensor 41 for measuring the air temperature inside the housing, sensor 42 for measuring the surface temperature of drum 25 and sensor 43 for sensing whether the coated layer of waste solution has dried sufficiently.

The condensing section 11 comprises the following elements.

A liquid jet hydraulic ejector 45 for collecting vapour from the evaporator 10 via conduit 46 and for generating vacuum in said evaporator. A first tank 47 in which the ejecting liquid and the partly condensed vapour are received via conduit 48. A baffle 49 in the tank forms a flow restrictor to ensure that no air bubbles would reach pump 53. A second, open tank 50, in which surplus liquid of tank 47 received via overflow 51 is stored, and which can be sent to a processor or to a storage holder under control of a sensor 55.

Sensor 52 senses the minimum level in tank 47 and stops the operation of the apparatus if not enough liquid is present.

Pump 53, e.g. a centrifugal-type pump, draws liquid from tank 47, and pumps it through heat exchanger 54 to hydraulic ejector 45.

A temperature sensor 56 controls fan 57 so that at the outlet of the heat exchanger a desired temperature is maintained. The degree of vacuum in evaporator 22 is bound to the temperature of the ejector liquid.

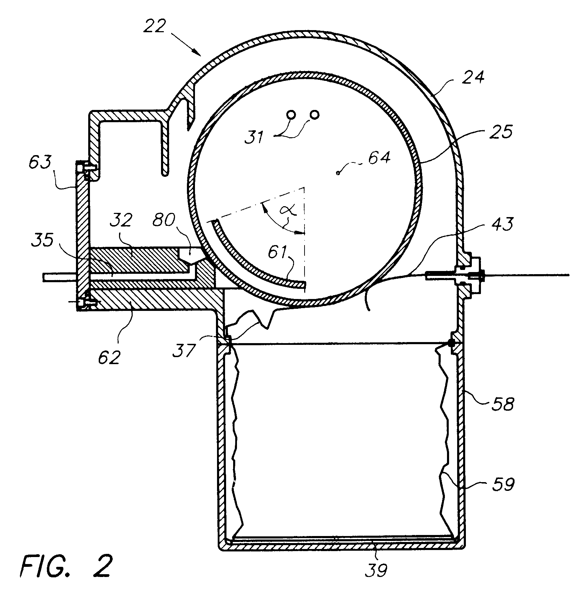

Fig. 2 shows a detailed view of evaporator 22.

Housing 24 comprises two parts, the lower part 58 being removable and vacuum-tightly connected with the upper part 24 and forming receptacle 38 for the collection of removed sludge. Part 58 preferably contains a bag, as indicated by numeral 59 for the collection of the removed sludge, which is in a powdery state. Heater 39 can have the form of a serpentine-like curved electrical heater located at the bottom of part 58 and producing a moderate heating of the bag thereby to obtain a dry sludge.

Heater 31 is a U-shaped electrical heating element. A stationary IR reflector 61 consists of a polished plate curved concentrically with drum 25 and extending over an angle α, approximately from the point where sludge is removed from the drum by scraper 37 up to slightly beyond waste solution applicator 32. A sensor 66 senses the temperature inside the drum.

Waste solution applicator 32 is mounted on a slide, not shown, fitted to base portion 62 of the upper part of housing 24, and is spring-biased so that in operation it is urged with a controlled force against the peripheral surface of the drum. The applicator has an inlet connection 35 and an outlet connection 36 (not shown in this figure) which vacuum-tightly pass through a removable panel 63 giving access to the inner side of the apparatus.

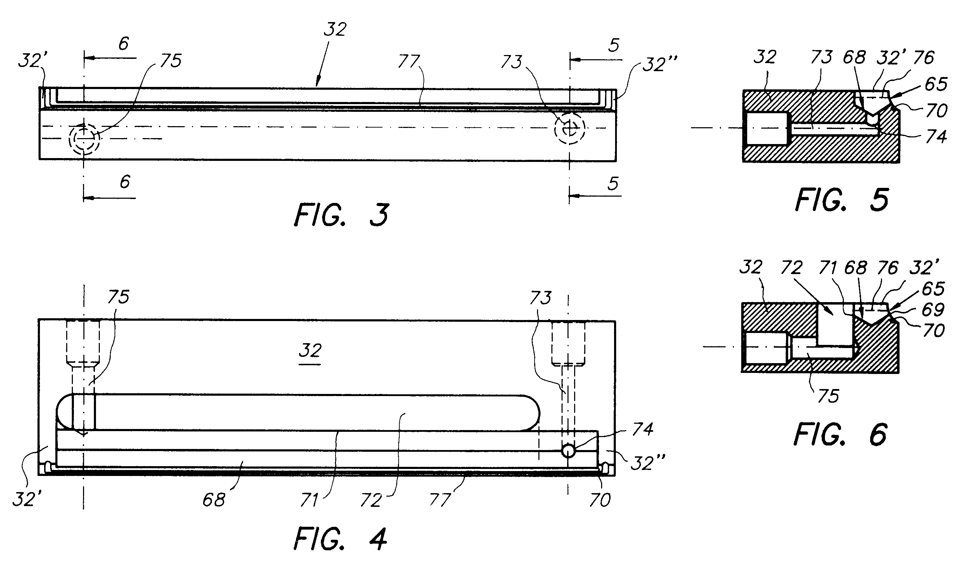

Figs. 3 to 6 illustrate waste solution applicator 32 in detail. In the present example, the applicator has been made by the appropriate machining of a solid block of phenolic resin.

The applicator has a generally rectangular shape. Its front end has an upper portion 65 curved concentrically with respect to the peripheral surface of drum 25. The applicator has a first gutter 68 with a front edge 69 forming the upper edge of a lip 70, and a rear edge 71 running parallel to the front edge and being located approximately at the same height. The first gutter is via overflow edge 71 in communication with a lower located second gutter 72. Waste solution is fed to the applicator through inlet bore 73 communicating via a bore 74 with the first gutter, whereas the amount of waste solution that has not become applied to drum 25 flows via edge 71 into the second gutter 72 and leaves the applicator via a bore 75 leading to conduit 36, see Fig. 1. Finally, lip 70 of the applicator is provided with a groove into which fits a sealing strip 77, see Figs 3 and 4, that slightly protrudes out of the front surface and resiliently bears against drum 25 in operation of the apparatus.

The lateral ends of gutter 68 are closed by wall portions 32' and 32'' being in fact portions of block 32 that remain after gutter 68 has been machined in said block.

In operation of the apparatus, waste liquid is pumped to the applicator at a rate such that a body of liquid is maintained in gutter 68 at a level 76 which is a slightly, i.e. in practice between 1 and 3 mm higher than a level determined by the edge 71. It should be noted that edge 69 is not an overflow edge as such, since the front opening of gutter 68 is in fact closed by the peripheral surface of the drum which liquid-tightly fits against sealing strip 77 of the applicator.

Rotating drum 25 becomes coated with a thin layer of waste solution so that the amount of waste solution leaving the applicator via outlet 36 is less than the amount fed via inlet 35. The described operation of the evaporator was started only after the required conditions of temperature and underpressure had been obtained.

The underpressure required for operation of evaporator 22 is obtained in section 11. Tank 47 being filled with water, pump 53 is operated to pump water through hydraulic ejector 45 whereby the air pressure in conduit 46 becomes smaller than atmospheric pressure. Pump 53 maintains a circulation of water so that the vapour pressure gradually lowers. At the same time there is a slight heating of the circulating liquid by energy taken up from the pump.

Waste solution is coated by applicator 32 on drum 25 at a temperature well below the boiling temperature of the solution at atmospheric pressure.

Since the pressure in evaporator 22 is well below atmospheric pressure, and since the surface temperature of drum 25 is well above the boiling temperature of said solution at said reduced pressure, water rapidly evaporates from the layer of waste solution on the drum surface so that sludge remaining on the drum is suited for removal at the moment the position of sensor 43 is reached. The sludge can be completely dry at that moment but it can also take a more or less liquid form depending on the composition of the sludge, the number of r.p.m. of the drum etc. Sludge is removed from the drum by scraper 37 and falls in bag 59.

The surface of drum 25 is no longer heated as it has passed scraper 37 until it reaches a position beyond the applicator 32, indicated by the angle α. The advantage is that the temperature of the drum surface is not unduely increased whereby problems with premature evaporation of waste solution in the applicator are avoided.

Vapour generated by evaporator 22 is extracted via conduit 46 and condensed in conduit 48. Condensation of the vapour produces heat, which increases the temperature of the water circulated by pump 53. Therefore, as sensor 56 senses too high a temperature, cooling fan 57 is actuated so that radiator 54 cools the circulating water until the correct temperature at the inlet of ejector 45 is obtained.

The following example illustrates the described apparatus and its operation.
- Drum 25 :: diameter 21,5 cm
length 48 cm
Speed : adjustable between 1 and 10 rpm
IR heaters 31 : 1,3 kW
Heater 39 : 0,3 kW
- Applicator 32 :: rate of input through conduit 35 6 to 100 l/h
rate of outlet through conduit 36 5 to 99 l/h
Temperature measured by sensor 66 : 120 °C.
Shield angle α : 50 angular degrees
Temperature of water leaving pump 53 : 42 °C
Temperature of water entering hydraulic ejector 45 : 40 °C
Underpressure produced by ejector 45 : 880 mbar
Temperature in housing 24 : 50 °C
Angular extent of lip 70 : 5 degrees
The present invention is not limited to the described embodiment.

The movable surface means in the evaporator need not necessarily be a drum, but may as well be an endless belt pulled over two or more guide rollers determining the path of the belt.

Section 11 for producing vacuum and for condensing vapour drawn from evaporator 22 may have a construction different from that shown in Fig. 1, and as an example of a different arrangement for the production of underpressure in the evaporator we refer to the disclosure of US-A-4,940,134 already referred to.

However, the arrangement of section 11 of the installation described hereinbefore by way of embodiment has definite advantages over the art, and therefore this arrangement forms the subject of a separate EP patent application filed on even day herewith and entitled "Installation for controlling the underpressure in an evaporator apparatus for treating a waste solution, and for condensing the evaporated vapour".

The pumps mentioned in the description may be other types of pumps, e.g. gear-type pumps, membrane pumps, etc.

Shield 61 does not form an essential part of the evaporator, and the waste solution applicator can have other forms than the illustrated one.

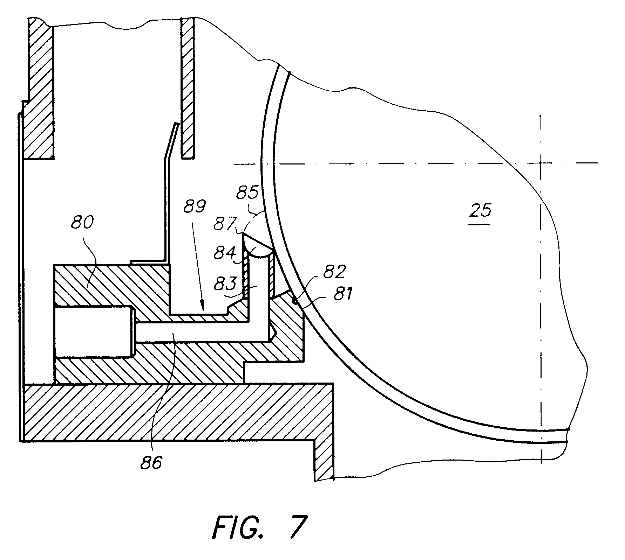

Figure 7 illustrates another embodiment of a liquid applicator suitable for use in an apparatus as shown in Fig. 1 and 2.

Applicator 80 has at its frontside a lip 81 provided with a sealing bead 82 bearing on drum 25. An upstanding elongate channel 83 extends parallel to the drum axid and has an opening slot 84 tapering towards the drum so that a puddle or pile of waste solution is maintained in contact with the drum, the free surface of the puddle being shown by broken line 85. The amount of waste solution fed per unit of time via supply bore 86 is larger than that which can be taken away by adherent contact with drum 25. The excess liquid overflows in particular rear edge 87 of opening 85 and is collected in tray 89 from which it is carried off through a suitable outlet opening, similar to the one described with reference to Figs. 4 and 6 hereinbefore.

## Claims

1. Evaporator apparatus for treating a waste solution, which comprises a closed chamber (24), surface means (25) in said chamber which is movable about a horizontal axis through an endless path, means (45) for maintaining a reduced pressure in said chamber, applicator means (32) for maintaining a body of waste solution in contact with said surface means, a tank (15) for waste solution and pump means (34) for feeding solution from said tank to said applicator means, heating means (31) for heating said movable surface means to cause waste solution applied thereto to become concentrated by evaporation to a sludge, and scraper means (37) for removing said sludge from said surface means,
characterised in that said applicator means (32) has two parallel edges, a front edge (69) for the application of waste solution to said surface means and a rear edge (71) for carrying back an amount of waste solution from said body to said tank (15) which is at least equal to the amount of solution applied over said first edge (69) to said movable surface means (25) per unit of time.

2. Apparatus according to claim 1, wherein the amount of waste solution being returned to the waste solution tank amounts to at least three times the amount of solution applied to the movable surface per unit of time.

3. Apparatus according to claim 2, wherein the amount of waste solution being returned to the waste solution tank amounts to at least ten times the amount of solution applied to the movable surface per unit of time.

4. Apparatus according to any of claims 1 to 3, wherein said applicator means (32) comprises a gutter 68 that is closed by lateral end wall portions (32', 32'') extending upwardly beyond the longitudinal top edges (69, 71) of said gutter.

5. Apparatus according to any of claims 1 to 4, wherein said applicator comprises a sealing (77) forming a liquid seal between said applicator and said movable surface means.

6. Apparatus according to any of claims 1 to 5, wherein said movable surface means is formed by the peripheral surface of a drum (25).

7. Apparatus according to any of claims 1 to 6, wherein said heating means for heating said movable surface means (25) comprises an IR radiator (31) installed within said endless path.

8. An apparatus according to claim 7, wherein IR shielding means (61) is mounted between said IR radiator (31) and the path of said movable surface means, thereby to shield a section of said movable surface means comprised between said scraper means and said applicator means.
